Europäisches Patentamt

European Patent Office

Office européen des brevets

(11) Veröffentlichungsnummer: **0 402 604**
**A2**

(12) **EUROPÄISCHE PATENTANMELDUNG**

(21) Anmeldenummer: **90108367.5**

(22) Anmeldetag: **03.05.90**

(51) Int. Cl.5: **B05B 15/12, B05B 5/08**

(30) Priorität: **15.06.89 DE 3919614**

(43) Veröffentlichungstag der Anmeldung:
**19.12.90 Patentblatt 90/51**

(84) Benannte Vertragsstaaten:
**AT CH DE ES FR GB IT LI**

(71) Anmelder: **Ransburg-Gema AG**
**Mövenstrasse 17**
**CH-9015 St. Gallen(CH)**

(72) Erfinder: **Dinkel, Bernard**
**Steigerstrasse 5a**
**CH-9000 St.Gallen(CH)**
Erfinder: **Gelain, Silvano**
**Senderligstrasse 3**
**CH-9030 Abtwil(CH)**

(74) Vertreter: **Vetter, Ewald Otto et al**
**Patentanwaltsbüro Allgeier & Vetter**
**Bahnhofstrasse 30 Postfach 102605**
**D-8900 Augsburg(DE)**

(54) **Anlage zum elektrostatischen Sprühbeschichten mit Pulver.**

(57) Der Kabinenboden ist durch ein endloses umlaufendes Filterband (16) gebildet. Die Oberflächen (78) der Kabinenwände bestehen aus einer Polypropylenschicht (76). Die Polypropylenschicht hat eine Dicke von 5 mm oder weniger, und in einer Entfernung von mindestens 60 mm von der Oberfläche (78) der Polypropylenschicht (76) befinden sich auf der von ihr abgewandten Seite dieser Polypropylenschicht keine Teile aus elektrisch leitfähigem Material. Dadurch lassen sich besonders kurze Farbwechselzeiten erzielen.

FIG. 2

EP 0 402 604 A2

**Anlage zum elektrostatischen Sprühbeschichten mit Pulver**

Die Erfindung betrifft eine Anlage zum elektrostatischen Sprühbeschichten mit Pulver gemäß dem Oberbegriff von Anspruch 1.

Solche Anlagen sind aus der DE-PS 24 30 517 (= US-PS 3 902 455) und DE-PS 25 46 920 (= US-PS 3 918 641) bekannt. Bei ihnen ist der Boden der Kabine durch ein kontinuierlich oder intermittierend umlaufendes endloses Filterband gebildet. Dieses Filterband fördert während des Beschichtungsbetriebes kontinuierlich Pulver aus der Kabine heraus, so daß in der Kabine nie eine zu große Pulverkonzentration entstehen kann. Das Pulver wird vom Filterband vorzugsweise durch eine Saugdüse abgenommen, oder vom Filterband in eine Auffangrinne gefördert oder durch Druckluft abgeblasen. Das über das Filterband zurückgewonnene Pulver kann direkt oder nach einer automatischen Pulveraufbereitungsbehandlung in einen Pulverbehälter gefördert werden, welchem auch frisches Pulver zugeführt wird und aus welchem die Mischung aus zurückgewonnenem Pulver und frischem Pulver zu einer Sprühvorrichtung gefördert wird. Beim Farbwechsel - Wechsel von einer Pulversorte auf eine andere Pulversorte - muß die gesamte Kabine so gründlich gereinigt werden, daß keine Pulverreste des zuerst verwendeten Pulvers in das danach verwendete Pulver gelangen, da schon kleinste Reste des ersten Pulvers zu sichtbaren Farbfehlern des zweiten Pulvers führen würden. Die Kabinenwände bestehen bei den Kabinen, deren Boden durch ein Filterband gebildet ist, aus Blech. Bei der Grobreinigung werden die Oberflächen der Kabinenwände mit einem Schaber gereinigt. Anschließend erfolgt eine Feinreinigung durch Abblasen von Pulverresten von den Kabinenwänden. Dabei werden aus einer mittelgroßen Kabine ungefähr 10 kg Pulver entfernt, wozu ein Zeitaufwand von ungefähr 2 Stunden erforderlich ist. Dabei kann nur das während der Grobreinigung gewonnene Pulver über das Filterband zurückgewonnen werden, während das bei der Feinreinigung abgeblasene Pulver Abfall ist. Die für den Farbwechsel oder die Reinigung erforderliche Zeit kann verkürzt werden, wenn auch das Pulver der Grobreinigung nicht für die Wiederverwendung aufbereitet wird, sondern als Abfall weggeworfen wird. Dies ist einerseits ein großer Pulververlust, andererseits aber billiger als die zur Reinigung erforderlichen Personalkosten und die Kosten für den Produktionsausfall, da während des Reinigungsvorganges keine Objekte beschichtet werden können. Farbwechsel und damit Reinigungsvorgänge sind jedoch sehr häufig erforderlich. Hierbei wird aus Kunststoft bestehendes Pulver verwendet.

Im Gegensatz dazu sind bei der Beschichtung mit Email-Pulver normalerweise keine Farbwechsel erforderlich, weil das verwendete Email stets die gleiche Farbe hat. Trotzdem ist es auch bei der Beschichtung mit Emailpulver nicht erwünscht, daß sich an den Kabinenwänden dicke Pulverschichten ablagern. Zur Verringerung der Haftfähigkeit von Email-Pulver wurde deshalb auch bereits vorgeschlagen, Platten aus Polypropylen, welche eine Dicke von mehr als 4 mm haben, auf die Kabineninnenseite von aus Blech bestehenden Kabinenwänden zu schrauben.

Bei einer anderen Art von Sprühbeschichtungskabinen besteht der Kabinenboden nicht aus einem Filterband, sondern aus massivem Material. Für solche Kabinen ist es bekannt, die Kabinenwände aus Kunststoff statt aus Blech herzustellen. Aus der EP-A1-0 200 681 ist eine Sprühbeschichtungskabine bekannt, deren Kabinenwand und deren trichterartiger Kabinenboden aus einem 100 mm dicken Kern aus Polyurethanschaumstoff gebildet ist, der an seiner Innenseite mit einer etwa 8 mm dicken Auflage aus PVC und an seiner Außenseite mit einer anderen Auflage aus Kunststoff beschichtet ist. Während des Sprühbeschichtens von Objekten innerhalb des Sprühbeschichtungsraumes der Kabine, welcher von der Kabinenwand begrenzt wird, haften an der inneren Oberfläche, welche durch die Schicht aus PVC gebildet ist, Pulverpartikel, welche von einer Sprühvorrichtung versprüht wurden, jedoch das zu beschichtende Objekt nicht getroffen haben oder von ihm abgeprallt sind. Diese Pulverpartikel können von der inneren Oberfläche der Kabinenwand durch Abblasen und anschließend durch feuchte Schwämme oder rotierende Bürsten entfernt werden. Ferner ist aus der DE-OS 33 15 426 A1 eine Pulverbeschichtungskabine bekannt, deren Kabinenwände und Kabinenboden aus elektrisch leitenden und geerdeten Platten bestehen, deren Innenseite mit einer mindestens 0,5 mm dicken Schicht aus PVC, Teflon, Polyethylen oder Nylon versehen ist. Diese Schicht aus Kunststoff ist durch eine elektrisch isolierende Klebeschicht auf der Platte aufgeklebt. Die Ecken im Sprühbeschichtungsraum der Kabine sind rund, damit sie leichter gereinigt werden können. Die innere Oberfläche der Kabinenwände und des Kabinenbodens kann durch Schaber, Wischer oder dergleichen, je nach Situation ohne Staubsauger, gereinigt werden. Durch die Verwendung von Kunststoff zur Bildung der inneren Oberflächen soll erreicht werden, daß sich nur eine geringe Menge an Pulverpartikeln an der inneren Oberfläche ansammelt, und daß angesammelte Pulverpartikel leicht wieder entfernt werden können.

Durch die Erfindung soll die Aufgabe gelöst werden, bei einer Anlage zum elektrostatischen Sprühbeschichten mit Pulver, insbesondere mit Kunststoff-Pulver, der im Oberbegriff von Anspruch 1 definierten Art,

2

die Farbwechselzeiten, also die zum Reinigen der Anlage zwischen der Verwendung von zwei verschiedenfarbigen Pulversorten erforderliche Zeit, zu reduzieren, ohne daß ein großer Verlust an Pulver entsteht und ohne daß hierfür ein großer anderer finanzieller oder technischer Aufwand erforderlich ist.

Diese Aufgabe wird gemäß der Erfindung durch die kennzeichnenden Merkmale von Anspruch 1 gelöst.

Durch die Erfindung wird die für einen Farbwechsel erforderliche Zeit drastisch reduziert, im Vergleich anhand einer mittelgroßen Anlage von ungefähr zwei Stunden auf nur noch ungefähr 15 Minuten. Durch die Erfindung ist keine Grobreinigung der Kabine mehr erforderlich, sondern nur noch eine Feinreinigung, beispielsweise durch Absaugen oder durch Abblasen. Gemäß der Erfindung haften an den Wänden einer solchen mittelgroßen Anlage nicht mehr 10 kg, sondern nur noch 1 kg von Pulver aus Kunststoffmaterial. Da diese Menge von 1 kg sehr gering ist, kann diese Menge als Abfall behandelt werden und braucht nicht zur Wiederverwendung aufbereitet werden.

Durch die Erfindung ist außer einer neuen und vorteilhaften Anlage auch ein neues Verfahren gegeben. Gemäß der Erfindung besteht dieses Verfahren darin, daß beim Sprühbeschichten von Objekten nacheinander mit verschiedenen Pulversorten mit einer Anlage nach der Erfindung und beim Reinigen dieser Anlage beim Wechsel von einer Pulversorte auf eine andere Pulversorte, während des Sprühbeschichtungsbetriebes Pulver vom Filterband in einen Pulverbehälter zurückgewonnen wird, und daß während des Reinigungsvorganges Pulver vom Filterband in einen Abfallbehälter gefördert wird.

Die Erfindung beruht auf folgenden Erkenntnissen und der vorteilhaften Kombination dieser Kenntnisse. Die Erfinder haben erkannt, daß Polypropylen und aus Kunststoff bestehendes Pulver eine geringe Haftfähigkeit miteinander haben. Ferner wurde von den Erfindern erkannt, daß die Haftfähigkeit um so geringer ist, je kleiner die Dicke der Polypropylenschicht ist. Die Polypropylenschicht sollte höchstens 5 mm betragen, vorzugsweise jedoch wesentlich kleiner als 5 mm sein. Dabei haben sich nur wenige µm Dicke der Polypropylenschicht als besonders vorteilhaft erwiesen. Ferner haben die Erfinder erkannt, daß sich auf der Oberfläche einer Polypropylenschicht dann besonders viel Pulver ansammelt, also eine starke Bindungswirkung zwischen Kunststoffpulver und Polypropylenschicht entsteht, wenn sich auf der von der Oberfläche abgewandten Seite der Polypropylenschicht ein elektrisch leitfähiger und geerdeter Körper befindet. Wenn die Entfernung des elektrisch leitfähigen, geerdeten Körpers von der Oberfläche klein ist, dann wird der elektrisch leitfähige Körper auf der Oberfläche in Form einer verstärkten Ansammlung von Pulverpartikeln "abgebildet". Von den Erfindern wurde erkannt, daß diese "Abbildung" dann nicht mehr entsteht, wenn die Entfernung von der Oberfläche 100 mm oder mehr beträgt. Je kleiner die Entfernung ist, desto stärker entsteht eine solche "Abbildung". Ferner wurde von den Erfindern erkannt, daß mit der erfindungsgemäß ausgebildeten Anlage ein Verfahren möglich ist, bei welchem die Zeiten für einen Farbwechsel wesentlich reduziert werden können, indem während des Beschichtungsbetriebes durch das Filterband ständig überschüssiges Pulver aus der Kabine abtransportiert wird, jedoch während des Pulverwechsels die gemäß der Erfindung nur geringe Menge von Pulver, welches an den Kabinenwänden haftet, nur abgeblasen oder abgesaugt und als Abfall behandelt wird. Die an den Kabinenwänden haftende Pulvermenge ist so gering, daß sich eine Wiederaufbereitung zur Wiederverwendung weder von der dafür erforderlichen Zeit noch vom maschinellen Aufwand her lohnt, und daß es deshalb preiswerter ist, die geringe Menge an Pulver der Kabinenwände als Abfall zu behandeln.

Weitere Merkmale der Erfindung sind in den Unteransprüchen enthalten.

Die Erfindung wird nachstehend mit Bezug auf Zeichnungen anhand mehrerer Ausführungsformen der Erfindung als Beispiele beschrieben. In den Zeichnungen zeigen

Fig. 1 schematisch eine Anlage zum elektrostatischen Sprühbeschichten mit Kunststoff Pulver gemäß der Erfindung,

Fig. 2 einen Querschnitt durch eine Pulverbeschichtungskabine der Anlage von Fig. 1 längs der Linie II-II, mit Kabinenwänden und einer Kabinendecke nach der Erfindung,

Fig. 3 einen Querschnitt einer weiteren Ausführungsform einer Kabinenwand nach der Erfindung, wobei der Querschnitt dem Bereich III von Fig. 2 entnommen ist,

Fig. 4 einen Querschnitt einer weiteren Ausführungsform nach der Erfindung ähnlich Fig. 3,

Fig. 5 einen Querschnitt einer nochmals weiteren Ausführungsform nach der Erfindung ähnlich Fig. 3.

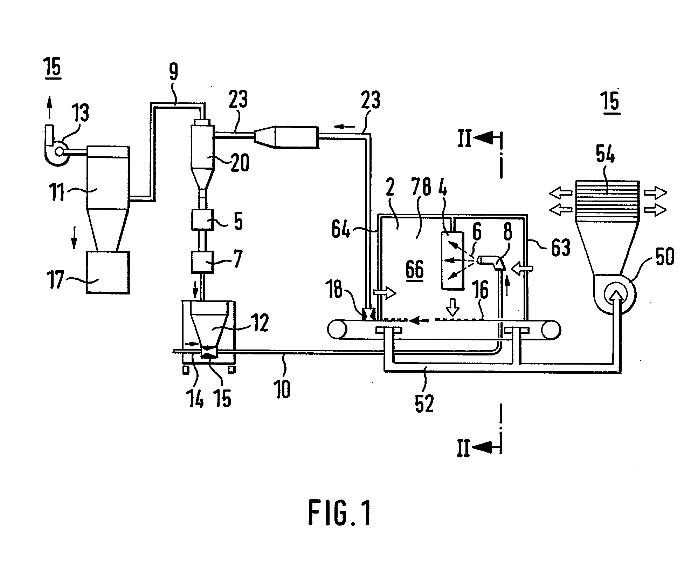

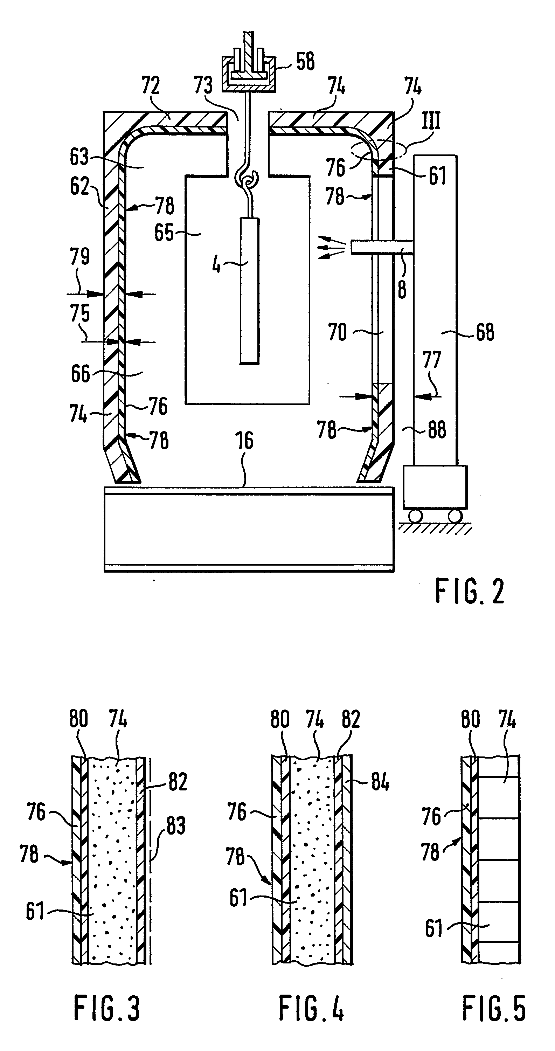

Die in Fig. 1 und 2 der Zeichnungen dargestellte Pulverbeschichtungsanlage enthält eine Kabine 2 zur Beschichtung eines hindurchlaufenden Objektes 4 mit Beschichtungspulver 6, welches von einer Sprühvorrichtung 8 in bekannter Weise elektrisch aufgeladen und auf das Objekt 4 gesprüht wird. Das Beschichtungspulver besteht aus Kunststoff. Das Beschichtungspulver wird der Sprühvorrichtung 8 über eine Leitung 10 von einem Frischpulver-Behälter 12 durch den Gasstrom einer Fördergasleitung 14 in bekannter Weise pneumatisch zugeführt, indem der Gasstrom einen Sog in einem "Venturi-Fördergerät 15 erzeugt. Das "Venturi"-Fördergerät 15 ist in bekannter Weise an den Pulverbehälter 12 und die beiden Leitungen 14 und 10 angeschlossen. Der Boden der Kabine 2 ist durch ein Filterband 16 gebildet, welches herabfallende Pulverteilchen kontinuierlich aus der Kabine 2 hinausfördert. Außerhalb der Kabine 2 wird das Pulver von einer Saugdüse 18 abgesaugt und über eine Saugleitung 23 einer Filtereinrichtung 20 zugeführt. Die Filtereinrichtung 20 ist bei dieser Ausführungsform ein Minizyklon. In der Saugleitung 23 befindet sich eine Siebvorrichtung 3 nach der aus der DE-PS 34 43 182 bekannten Art. In ihr befindet sich ein Sieb, in welchem durch Turbulenzströmung Pulver ausgesiebt wird. Pulver, welches im Minizyklon 20 abgeschieden wird, wird über nacheinander angeordnete, wechselweise geöffnete Quetschventile 5 und 7 in den Frischpulver-Behälter 12 zurückgeleitet. Die Abluft des Minizyklons 20 wird über eine Fluidleitung 9 einem Filterabscheider 11 zugeführt. Aus dem Filterabscheider 11 wird die Abluft von einem Gebläse 13 in den Arbeitsraum 15 getrieben, und das ausgeschiedene Pulver fällt in einen Abfallpulver-Behälter 17.

Ein Gebläse 50 saugt durch das Filterband 16 hindurch über darunter angeordnete Saugleitungen 52 Luft aus der Kabine 2 und gibt diese Luft über einen Nachfilter 54 in den Arbeitsraum 15 zurück.

Während des Beschichtungsbetriebes wird das vom Filterband 16 aufgefangene Pulver über die Rückgewinnungseinrichtung 18, 23, 20, 5,7 in den Frischpulver-Behälter 12 zurückgeführt und neu verwendet, indem es daraus wieder der Sprühvorrichtung 8 zugeführt wird. In dem Frischpulver-Behälter 12 befindet sich dieses zurückgewonnene Pulver und frisches Pulver. Während eines Farbwechsels - Zeit zum Wechseln von Pulver einer Farbe auf ein Pulver einer anderen Farbe - wird das von der Saugdüse 18 vom Filterband 16 abgesaugte Pulver nicht in die Filtereinrichtung 20, sondern in den Abfallpulver-Behälter 21 gefördert. Hierzu wird das Ende der Saugleitung 23 der Saugdüse 18 von der Filtereinrichtung 20 getrennt und stattdessen mit dem Filterabscheider 11 strömungsmäßig verbunden. In Fig. 1 sind die Strömungsrichtungen durch Pfeile angegeben.

Die Kabine 2 hat je längs verlaufende vordere und hintere Kabinenwände 61 und 62 und stirnseitige Kabinenwände 63 und 64. In den stirnseitigen Kabinenwänden 63 und 64 befindet sich je ein Durchlaß 65, durch welchen zu beschichtende Objekte 4 mittels einer Transportvorrichtung 58 in Längsrichtung durch den Sprühbeschichtungsraum 66 der Kabine 2 hindurchtransportiert werden können. Die Objekte 4 werden im Sprühbeschichtungsraum 66 durch mindestens eine Sprühvorrichtung 8 mit Pulver elektrostatisch beschichtet. Die Sprühvorrichtung 8 kann von Hand gehalten werden oder von einem Hubständer 68 getragen und von ihm durch eine Öffnung 70 der vorderen Kabinenwand 61 in den Sprühbeschichtungsraum 66 der Kabine 2 eingefahren und darin vertikal und horizontal bewegt werden. Das Kabinendach 72 ist durch einen mittigen Längsschlitz 73 geteilt, durch welchen die Transportvorrichtung 58 hindurchragt. Gemäß Fig. 2 bestehen die Kabinenwände 61, 62, 63, 64 und das Kabinendach 72 jeweils aus einem tragenden Wandelement 74 aus elektrisch isolierendem Material, vorzugsweise aus einem Kunststoff, und aus einer mit dessen Innenseite verbundenen Schicht 76 aus Polypropylen, deren innere Oberfläche 78 den Sprühbeschichtungsraum 66 begrenzt.

Die Schicht 76 aus Polypropylen deckt die gesamte Innenseite des Wandelements 74 und ist mit diesem verklebt. Wenn Polypropylen und das Material des Wandelements 74 in einen klebefähigen Zustand gebracht werden können, dann können sie direkt miteinander verklebt werden, ohne daß zusätzlich Kleber erforderlich ist. Dies ist beispielsweise dann möglich, wenn das Wandelement 74 aus verstärktem Kunststoff besteht. Hierbei kann es sich um kalt oder warm verarbeitbaren Einkomponenten- oder Mehrkomponenten-Kunststoff handeln. Zur Verstärkung des Kunststoffes können in bekannter Weise Fasern oder gitter- oder tuchförmige Elemente aus Glas oder einem anderen Material in den Kunststoff integriert werden. Der verstärkte Kunststoff ist vorzugsweise ein Laminat aus Polyester und Glasfasern. In einer anderen Ausführungsform kann das Wandelement 74 aus einem Material bestehen, welches nicht selbst klebfähig gemacht werden kann. In diesem Falle kann zwischen dem Wandelement 74 und der Polypropylenschicht 76 ein Kunststoffkleber zur Verbindung beider Teile verwendet werden. Als Kunststoffkleber wird vorzugsweise ebenfalls ein, z.B. durch Glasfasern verstärkter Kunststoff verwendet.

Die Schicht 76 aus Polypropylen kann die Form einer Platte haben. Da sie vorzugsweise eine Dicke von nur 5 mm oder weniger hat und bessere Ergebnisse erzielt werden, je dünner die Schicht 76 ist, hat die Schicht 76 gemäß einer bevorzugten Ausführungsform nach der Erfindung die Form einer nur wenige $\mu$m dicken Folie. Die Dicke der Folie ist in Fig. 2 mit 75 bezeichnet. Wenn die Entfernung 77 der Oberfläche 78 der Polypropylenschicht 76 von Bauelementen aus elektrisch leitendem Material auf der Außenseite der Kabine, beispielsweise von dem Hubständer 68, kleiner als 100 mm ist, dann wird dieses äußere Bauelement auf der inneren Oberfläche 78 in Form einer erhöhten Pulverablagerung "abgebildet". Die Entfernung 77 sollte deshalb mindestens 60 mm, und vorzugsweise ungefähr 100 mm betragen. Diese Entfernung 77 von ungefähr 100 mm wird mit Sicherheit dann immer eingehalten, wenn die Gesamtdicke 79 von der Polypropylenschicht 76 und dem Wandelement 74 mindestens diese 100 mm beträgt. Wenn die Polypropylenschicht 76 selbsttragend ist, also eine ausreichende Festigkeit hat, um als Wand- oder Deckenteil verwendet zu werden, dann kann auf das tragende Wandelement 74 vollständig verzichtet werden. Die genannte Entfernung 77 von 100 mm kann auch durch einen Luftzwischenraum eingehalten werden. Gemäß Fig. 2 wird die Entfernung 77 ungefähr zur Hälfte durch die Gesamtdicke 79 von Polypropylenschicht 76 und tragendem Wandelement 74 gebildet, und zur anderen Hälfte durch einen Luftzwischenraum 88 zwischen dem Wandelement 74 und dem Hubständer 68.

Gemäß der in Fig. 3 dargestellten besonderen Ausführungsform der Erfindung bestehen mindestens die längsseitigen Kabinenwände 61 und 62 der Kabine aus einem tragenden Wandelement 74, auf dessen Innenseite durch einen Kleber 80 eine Schicht 76 aus Polypropylen mit einer inneren Oberfläche 78 aufgeklebt ist und dessen Außenseite mit einer Deckschicht 82 versehen ist. Das Wandelement 74 besteht aus geschäumtem und gehärtetem Polyurethan. Der in Form einer Zwischenschicht aufgebrachte Kleber 80 und die Deckschicht 82 bestehen aus verstärktem Kunststoff, vorzugsweise aus glasfaser-verstärktem Kunststoff, z.B. Polyester. Gemäß einer abgewandelten Ausführungsform ist keine eigene Deckschicht 82 vorgesehen, sondern eine Außenhaut des Wandelements 74, welche integral aus dem Material dieses Wandelements 74 gebildet ist, bildet eine schützende Deckschicht. Gemäß einer nochmals anderen Ausführungsform nach der Erfindung kann auf die Außenseite der Kunststoffschicht 82 eine weitere Schicht 83 aus Polypropylen aufgeklebt sein, wie dies in Fig. 3 durch eine gestrichelte Linie 83 schematisch dargestellt ist.

Eine Kabinenwand und ein Kabinendach, deren den Sprühbeschichtungsraum 66 der Kabine 2 begrenzende innere Oberfläche 78 aus Polypropylen besteht, ergibt bessere Ergebnisse, also kleinere Haftfähigkeit von Beschichtungspulver aus Kunststoff, als Oberflächen 78 aus einem anderen Material. Noch wesentlich bessere Ergebnisse werden gemäß der Erfindung erzielt, wenn auf der von der Oberfläche 78 abgewandten Seite der Polypropylenschicht 76 eine Schicht 84 aus elektrisch leitendem Material angeordnet ist und diese leitende Schicht potentialfrei ist, indem sie weder an Erde noch an ein anderes Spannungspotential angeschlossen ist. Die leitende Schicht kann unmittelbar an der Polypropylenschicht 76 anliegen oder mit Abstand davon angeordnet sein. Der Abstand der leitenden Schicht von der inneren Oberfläche 78 der Polypropylenschicht 76 sollte für gute Ergebnisse mindestens 60 mm betragen und beträgt vorzugsweise etwa 100 mm. Die in Fig. 4 dargestellte bevorzugte Ausführungsform dieser Art nach der Erfindung besteht aus dem Wandelement 74 aus geschäumtem Kunststoff, vorzugsweise Polyurethan, einer Polypropylenschicht 76, welche durch eine Schicht 80 aus verstärktem Kunststoff auf die eine Oberfläche des Wandelements 74 geklebt ist, und aus einer Schicht 84 aus elektrisch leitendem Material, welches durch eine zweite Schicht 82 aus verstärktem Kunststoff auf die entgegengesetzte Oberfläche des Wandelements 74 geklebt ist. Die elektrisch leitende Schicht 84 ist potentialfrei, indem sie weder geerdet noch an eine andere elektrische Spannungsquelle angeschlossen ist. Das Ergebnis wird schlechter, indem sich auf der inneren Oberfläche 78 eine dickere Schicht Pulver ansammelt und dieses Pulver stärker haftet, wenn die elektrisch leitende Schicht 84 an Erdpotential angeschlossen wird. Aber auch bei geerdeter Schicht 84 ist das Ergebnis noch besser als beim Stand der Technik.

Gemäß einer nochmals weiteren Ausführungsform nach Fig. 5 der Erfindung kann die Kabinenwand 61 und dementsprechend auch die anderen Kabinenwände 62-64 und die Decke 72 durch ein selbsttragendes Wandelement 74, welches eine wabenförmige oder gitterförmige Gestalt hat, und eine auf dessen Innenseite über einen Kleber 80 aufgeklebte Schicht aus Polyprolylen 76 gebildet sein, dessen innere Oberfläche 78 den Sprühbeschichtungsraum 66 der Kabine 2 begrenzt.

Die Erfindung kann in verschiedenen Ausführungsformen realisiert werden. In der folgenden Tabelle stellen die Spalten in der angegebenen Reihenfolge die Schichten dar, aus welchen die Kabinenwände 61, 62, 63 und 64 und die Kabinendecke 72 bestehen können.

| 78 | Schichten Nr. | | | | | | 88 |
|---|---|---|---|---|---|---|---|
| | 76 | 80 | 74 | 82 | 83 | 84 | |
| | PP | - | - | - | - | - | |
| | PP | GFK | - | - | - | A | |
| | PP | GFK | - | - | - | B | |
| | PP | GFK | PU | - | - | - | |
| | PP | GFK | PU | GFK | - | - | |
| | PP | GFK | PU | GFK | P | - | |
| | PP | GFK | PU | GFK | - | A | |
| | PP | GFK | PU | GFK | - | B | |

PP = Polypropylen

GFK = Glasfaserverstärkter Kunststoff

PU = Polyurethan-Schaum

A = elektrisch leitendes Material

B = elektrisch isolierendes Material

Statt Polyurethan kann Polystyrol verwendet werden. Bevorzugt wird aber Polyurethan. Alle Materialien können in Form einer Folie oder Platte verwendet werden. Polyurethan und Polystyrol werden vorzugsweise in geschäumter Form verwendet.

Diese einzelnen Schichten 76, 80, 74, 82, 83 und 84 liegen nicht nur aneinander an, sondern sind über ihre gesamte Flächenausdehnung entweder durch Klebewirkung oder durch bekannte Beschichtungstechniken innig miteinander verbunden.

Bei der Anlage nach der Erfindung haftet so wenig Pulver an den inneren Oberflächen 78 der Wände und Decke, insbesondere an den langen Kabinenwänden 61 und 62, und die Haftungsstärke ist so gering, daß es bei einem Farbwechsel genügt, dieses Pulver von den Wänden abzublasen oder abzusaugen und als Abfall zu behandeln. Es ist im Gegensatz zum Stand der Technik weder eine Grobreinigung der Wände durch mechanische Mittel nötig, noch lohnt es sich die geringe Pulvermenge für eine Wiederverwendung aufzubereiten. Dadurch ist bei einer mittelgroßen Kabine nach der Erfindung ein Farbwechsel in etwa 15 Minuten möglich, im Gegensatz zu 2 Stunden bei einer gleich großen Kabine nach dem Stand der Technik.

**Ansprüche**

1. Anlage zum elektrostatischen Sprühbeschichten mit Pulver,
mit einer Beschichtungskabine (2), deren Boden durch ein Filterband (16) gebildet ist,
mit mindestens einer Sprühvorrichtung (8) zum elektrostatischen Sprühbeschichten von Objekten (4) mit Pulver (6) in der Beschichtungskabine (2),
mit einer Pulverrückgewinnungseinrichtung (18, 20, 24) zur Übertragung von Pulver vom Filterband (16) in einen Pulverbehälter (12), aus welchem es der Sprühvorrichtung (8) zugeführt wird,
**dadurch gekennzeichnet,**
daß die Oberflächen (78) der Wände (61, 62, 63, 64), welche den Sprühbeschichtungsraum (66) in der Beschichtungskabine (2) begrenzen, durch eine Polypropylenschicht (76) gebildet sind,
daß die Polypropylenschicht (76) eine Dicke (75) von 5 mm oder weniger hat,
daß sich in einer Entfernung (77) von mindestens 60 mm von der Oberfläche (78) der Polypropylenschicht (76) auf der von ihr abgewandten Seite dieser Polypropylenschicht (76) keine Teile aus elektrisch leitfähigem Material befinden.

2. Anlage nach Anspruch 1,
**dadurch gekennzeichnet,**
daß die Entfernung (77) mindestens 100 mm beträgt.

3. Anlage nach Anspruch 1 oder 2,
**dadurch gekennzeichnet,**
daß die Polypropylenschicht (76) von einem Wandelement (74) aus Kunststoff getragen wird, welches sich auf seiner von der Oberfläche (78) abgewandten Außenseite befindet.

4. Anlage nach Anspruch 3,

**dadurch gekennzeichnet,**
daß das Wandelement (74) aus geschäumtem und ausgehärtetem Kunststoff besteht.

5. Anlage nach Anspruch 3 oder 4,
**dadurch gekennzeichnet,**
daß das Wandelement (74) aus Polyurethan besteht.

6. Anlage nach Anspruch 3 oder 4,
**dadurch gekennzeichnet,**
daß das Wandelement (74) aus Polystyrol besteht.

7. Anlage nach Anspruch 3,
**dadurch gekennzeichnet,**
daß das Wandelement (74) aus verstärktem Kunststoff besteht.

8. Anlage nach einem der Ansprüche 3 bis 6,
**dadurch gekennzeichnet,**
daß die Polypropylenschicht (76) über eine als Kleber wirkende Schicht (80) aus verstärktem Kunststoff an dem Wandelement (74) befestigt ist.

9. Anlage nach einem der Asnprüche 3 bis 8,
**dadurch gekennzeichnet,**
daß auf dem Wandelement (74), auf seiner von der Oberfläche (78) der Polypropylenschicht (76) abgewandten Seite, eine zweite Polypropylenschicht (83) befestigt ist.

10. Anlage nach Anspruch 9,
**dadurch gekennzeichnet,**
daß die zweite Polypropylenschicht (83) über eine als Kleber wirkende Schicht (82) aus verstärktem Kunststoff an dem Wandelement (74) befestigt ist.

11. Anlage nach einem der Ansprüche 1 bis 10,
**dadurch gekennzeichnet,**
daß auf der von der Oberfläche (78) der Polypropylenschicht (76), welche den Sprühbeschichtungsraum (66) begrenzt, abgewandten Seite eine Schicht (84) aus elektrisch leitendem Material angeordnet ist, welche von der Oberfläche (78) einen Abstand von mindestens 60 mm hat und welche weder geerdet noch an ein anderes elektrisches Spannungspotential angeschlossen ist.

FIG.1

EP 0 402 604 A2

FIG. 2

FIG.3   FIG.4   FIG.5